# EUROPEAN PATENT APPLICATION

(11) **EP 4 737 531 A1**
(43) Date of publication of application: **06.05.2026**
(21) Application number: 24831743.0
(22) Date of filing: 17.06.2024
(51) Int. Cl.: C09K 5/04

(54) **WORKING MEDIUM FOR REFRIGERATION CYCLE, AND REFRIGERATION CYCLE SYSTEM**

(30) Priority: 30.06.2023 JP 2023108190
(71) Applicant: Panasonic Intellectual Property Management Co., Ltd., Kadoma-shi, Osaka 571-0057 (JP)
(72) Inventor: MURAKAMI, Hikaru, kadoma-shi, Osaka 571-0057 (JP); HASHIMOTO, Takahiko, kadoma-shi, Osaka 571-0057 (JP); SAKATA, Naoya, kadoma-shi, Osaka 571-0057 (JP); TSUNOYAMA, Hironori, kadoma-shi, Osaka 571-0057 (JP)
(74) Representative: Eisenführ Speiser
(86) International application number: PCT/JP2024/021856
(87) International publication number: WO 2025/004880

(57) **Abstract**

A refrigeration-cycle working medium includes: as a refrigerant component, fluoroolefin that causes a disproportionation reaction; and as a disproportionation inhibitor that suppresses the disproportionation reaction of the fluoroolefin, hydrofluoroolefin that is different from the fluoroolefin and has three or more carbon atoms. The hydrofluoroolefin may not have a perfluoromethyl group (-CF₃) and a perfluoromethylene group (-CF₂-) in a molecular structure thereof or may have at least one of a methyl group (-CH₃), a fluoromethyl group (-CH₂F), or a difluoromethyl group (-CHF₂) in the molecular structure.

## Description

### Technical Field

The present invention relates to a refrigeration-cycle working medium that can effectively suppress or weaken a disproportionation reaction of fluoroolefin (fluoroalkene), such as 1,1,2-trifluoroethylene, and a refrigeration cycle system that uses the refrigeration-cycle working medium.

### Background Art

As a refrigeration-cycle working medium (a refrigerant or a heat medium), HCFCs (hydrochlorofluorocarbons) have been used in the past. However, the HCFCs largely influence ozone layer depletion. Therefore, in recent years, HFCs (hydrofluorocarbons) having an ozone depletion potential (ODP) of zero are used. Among such HFCs, the use of fluoroolefin having a lower global warming potential (GWP), especially hydrofluoroolefin (HFO), has been recently proposed.

Known as representative HFOs are, for example, 1,1,2-trifluoroethylene (HFO1123) and difluoroethylene (HFO1132). These HFOs are lower in stability than the conventional HFCs and the like. Therefore, the HFOs hardly remain in the atmosphere, and thus, has a low ODP and a low GWP. However, it is also known that since the stability of the HFO is low, a self-polymerization reaction which is called a disproportionation reaction tends to occur (such reaction is hereinafter referred to as the disproportionation reaction).

The disproportionation reaction tends to occur by being induced by, for example, heat generated during the use of the refrigeration-cycle working medium. In addition, it is also known that since large heat dissipation is caused by the occurrence of the disproportionation reaction, the disproportionation reactions occur successively. As a result, a large amount of soot is generated, and this may deteriorate the reliability of a refrigeration cycle system or the reliability of a compressor and the like constituting the refrigeration cycle system.

Therefore, when, for example, the 1,1,2-trifluoroethylene is used as a refrigerant component of the refrigeration-cycle working medium, the present applicants propose, as a component (disproportionation inhibitor) that suppresses the disproportionation reaction of the 1, 1,2-trifluoroethylene, halomethane (PTL 1), saturated hydrocarbon (PTL 2), haloethane (PTL 3), a combination of these (PTL 4 or 5), and difluoroiodomethane (PTL 6) as a representative example of the especially suitable disproportionation inhibitor.

As the refrigerant component that can be used together with the 1,1,2-trifluoroethylene, difluoromethane (HFC32, R32) is also known (R32 is a refrigerant number based on Standard 34 of American Society of Heating, Refrigerating and Air-Conditioning Engineers (ASHRAE)). For example, PTLs 1 to 4 disclose that a main refrigerant component is the 1,1,2-trifluoroethylene, but the difluoromethane can be used together. PTLs 5 and 6 disclose that the 1,1,2-trifluoroethylene (or fluoroolefin) and the difluoromethane are used together as the refrigerant components.

### Citation List

### Patent Literature

PTL 1: Japanese Laid-Open Patent Application Publication No. 2017-145380
PTL 2: Japanese Laid-Open Patent Application Publication No. 2018-048271
PTL 3: Japanese Laid-Open Patent Application Publication No. 2018-104565
PTL 4: Japanese Laid-Open Patent Application Publication No. 2018-104566
PTL 5: Japanese Laid-Open Patent Application Publication No. 2019-034983
PTL 6: Japanese Laid-Open Patent Application Publication No. 2021-161316

### Summary of Invention

### Technical Problem

The above-described disproportionation inhibitor can effectively suppress or weaken the disproportionation reaction of the fluoroolefin, such as the 1,1,2-trifluoroethylene. Moreover, even when the difluoromethane is used together as the refrigerant component, the above-described disproportionation inhibitor can effectively suppress or weaken the disproportionation reaction of the fluoroolefin.

In recent years, regarding such refrigeration-cycle working medium, in addition to achieving the effective suppression or weakening of the disproportionation reaction of the fluoroolefin, there is a growing tendency to seek a further reduction in environmental impact.

The present invention was made to solve the above problems, and an object of the present invention is to further reduce the environmental impact regarding the refrigeration-cycle working medium which includes the fluoroolefin as the refrigerant component and also includes the disproportionation inhibitor.

### Solution to Problem

The present inventors have diligently studied to solve the above problems. As a result, the present inventors have uniquely found that: the hydrofluoroolefin has been considered to be unable to exhibit suitable performance as the refrigerant component; however, by combining the hydrofluoroolefin with fluoroolefin suitable as the refrigerant component, the disproportionation reaction of the fluoroolefin can be effectively suppressed or weakened, and the environmental impact can be further reduced. Thus, the present invention has been made.

To solve the above problems, a refrigeration-cycle working medium according to the present disclosure includes: as a refrigerant component, fluoroolefin that causes a disproportionation reaction; and as a disproportionation inhibitor that suppresses the disproportionation reaction of the fluoroolefin, hydrofluoroolefin that is different from the fluoroolefin and has three or more carbon atoms.

According to the above configuration, the refrigeration-cycle working medium including the fluoroolefin that causes the disproportionation reaction includes, as the disproportionation inhibitor, at least the hydrofluoroolefin that is different from the refrigerant component and has three or more carbon atoms. This hydrofluoroolefin can effectively suppress or weaken the disproportionation reaction of the fluoroolefin.

In addition, this hydrofluoroolefin can be utilized as the refrigerant component. The hydrofluoroolefin has a satisfactory heat capacity comparable to that of the fluoroolefin and is easily mixed with the fluoroolefin. Therefore, the hydrofluoroolefin is suitable as a mixture component of the refrigeration-cycle working medium.

Moreover, as with the fluoroolefin as the refrigerant component, the hydrofluoroolefin includes a carbon-carbon double bond in the molecular structure. Therefore, the hydrofluoroolefin is readily decomposable in the natural environment, and this results in a short atmospheric lifetime and relatively low environmental impact.

Therefore, according to the above configuration, the disproportionation reaction of the fluoroolefin can be effectively suppressed or weakened, and the energy efficiency of the refrigeration-cycle working medium can be made satisfactory. Moreover, the environmental impact can be further reduced.

Moreover, the present disclosure includes a refrigeration cycle system configured by using the above refrigeration-cycle working medium.

The above object, other objects, features, and advantages of the present invention will be made clear by the following detailed explanation of preferred embodiments with reference to the attached drawings.

### Advantageous Effects of Invention

By the above configuration, the present invention can obtain an effect of being able to further reduce environmental impact regarding the refrigeration-cycle working medium which includes the fluoroolefin as the refrigerant component and also includes the disproportionation inhibitor.

### Brief Description of Drawings

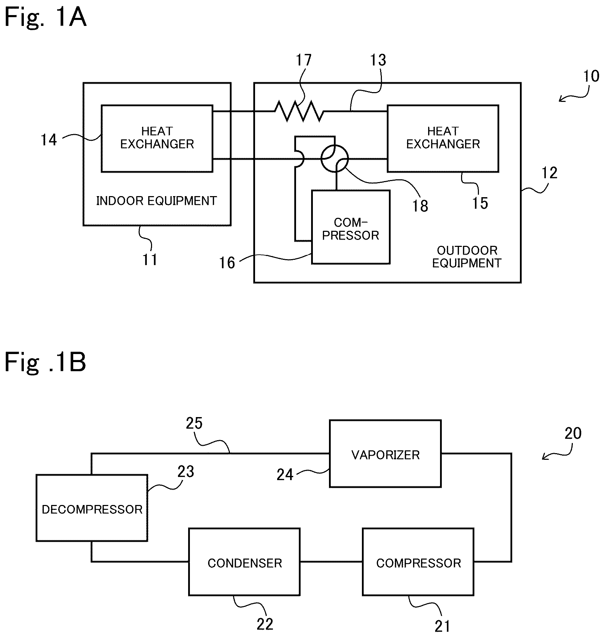

FIGS. 1A and 1B are schematic block diagrams each showing one example of a refrigeration cycle system according to one embodiment of the present disclosure.

### Description of Embodiments

A refrigeration-cycle working medium according to the present disclosure includes: as a refrigerant component, fluoroolefin that causes a disproportionation reaction; and as a disproportionation inhibitor that suppresses the disproportionation reaction of the fluoroolefin, hydrofluoroolefin that is different from the fluoroolefin and has three or more carbon atoms.

According to the above configuration, the refrigeration-cycle working medium including the fluoroolefin that causes the disproportionation reaction includes, as the disproportionation inhibitor, at least the hydrofluoroolefin that is different from the refrigerant component and has three or more carbon atoms. This hydrofluoroolefin can effectively suppress or weaken the disproportionation reaction of the fluoroolefin.

In addition, this hydrofluoroolefin can be utilized as the refrigerant component. The hydrofluoroolefin has a satisfactory heat capacity comparable to that of the fluoroolefin and is easily mixed with the fluoroolefin. Therefore, the hydrofluoroolefin is suitable as a mixture component of the refrigeration-cycle working medium.

Moreover, as with the fluoroolefin as the refrigerant component, the hydrofluoroolefin includes a carbon-carbon double bond in the molecular structure. Therefore, the hydrofluoroolefin is readily decomposable in the natural environment, and this results in a short atmospheric lifetime and relatively low environmental impact.

Therefore, according to the above configuration, the disproportionation reaction of the fluoroolefin can be effectively suppressed or weakened, and the energy efficiency of the refrigeration-cycle working medium can be made satisfactory. Moreover, the environmental impact can be further reduced.

In the above refrigeration-cycle working medium, the hydrofluoroolefin may not have a perfluoromethyl group (-CF₃) and a perfluoromethylene group (-CF₂-) in a molecular structure thereof.

Moreover, in the above refrigeration-cycle working medium, the hydrofluoroolefin may have at least one of a methyl group (-CH₃), a fluoromethyl group (-CH₂F), or a difluoromethyl group (-CHF₂) in a molecular structure thereof.

Moreover, in the above refrigeration-cycle working medium, the hydrofluoroolefin may have a boiling point of 0°C or less.

Moreover, in the above refrigeration-cycle working medium, the hydrofluoroolefin may be 2,3,3-trifluoropropene (HFO1243yf, CF₂H-CF = CH₂), 1,1-difluoropropene (HFO1252zc, CH₃-CH = CF₂), 2-fluoropropene (HFO1261yf, CH₃-CF = CH₂), or 3-fluoropropene (HFO1261zf, CFH₂-CH = CH₂).

Moreover, in the above refrigeration-cycle working medium, the fluoroolefin that causes the disproportionation reaction may be 1,1,2-trifluoroethylene or difluoroethylene.

Moreover, the above refrigeration-cycle working medium may further include difluoromethane (R32) as the refrigerant component.

Moreover, the above refrigeration-cycle working medium may further include, when the hydrofluoroolefin is a main disproportionation inhibitor, as the disproportionation inhibitor, a sub-disproportionation inhibitor that is at least one selected from the group consisting of (i) haloalkane that has one or two carbon atoms and is not a compound in which all halogen atoms are fluorine, (ii) fluoroalkane having a boiling point of 0°C or less and having one to three carbon atoms (except for difluoromethane), and (iii) saturated hydrocarbon having two to five carbon atoms.

Moreover, in the above refrigeration-cycle working medium, when a total amount of the refrigerant component and the disproportionation inhibitor is regarded as 100 mass %, the content of the hydrofluoroolefin may be 50 mass % or less.

Moreover, in the above refrigeration-cycle working medium, when a total amount of the refrigerant component and the disproportionation inhibitor is regarded as 100 mass %, the content of the difluoromethane may be 30 mass % or less.

Moreover, in the above refrigeration-cycle working medium, when a total amount of the refrigerant component and the disproportionation inhibitor is regarded as 100 mass %, the content of the sub-disproportionation inhibitor may be 10 mass % or less.

Moreover, the present disclosure includes a refrigeration cycle system configured by using any one of the above refrigeration-cycle working mediums.

Hereinafter, a representative embodiment of a refrigeration-cycle working medium according to the present disclosure, a representative method of using the refrigeration-cycle working medium, and the like will be specifically described.

### Refrigerant Component

In the refrigeration-cycle working medium according to the present disclosure, at least fluoroolefin (fluoroalkene) that causes a disproportionation reaction is used as a refrigerant component.

Specific examples of the fluoroolefin that causes the disproportionation reaction include 1,1,2-trifluoroethylene (CF₂ = CHF, HFO1123), trans-1,2-difluoroethylene (CHF = CHF(E), HFO1132(E)), cis-1,2-difluoroethylene (CHF = CHF(Z), HFO1132(2)), 1,1-difluoroethylene (CF₂ = CH₂, HFO1132a), and tetrafluoroethylene (CF₂ = CF₂, FO1114). However, the fluoroolefin that causes the disproportionation reaction is not especially limited. Only one of these fluoroolefins may be used as the refrigerant component, or a combination of two or more of the fluoroolefins may be used as the refrigerant component.

The fluoroolefin includes an ethylene structure as a skeleton, i.e., a double bond between a carbon atom and a carbon atom, and includes such a chemical structure that at least one of two hydrogen atoms bonded to one of the carbon atoms is substituted by a fluorine atom, or at least one of two hydrogen atoms bonded to both of the carbon atoms is substituted by a fluorine atom. In the fluoroolefin, at least one of the hydrogen atoms may be substituted by another atom or another substituent.

For example, the 1,1,2-trifluoroethylene includes such a structure that: both of two hydrogen atoms bonded to one of the carbon atoms (i.e., the carbon atom at a first position) of the ethylene structure are substituted by fluorine atoms; and one of two hydrogen atoms bonded to the other carbon atom (i.e., the carbon atom at a second position) is substituted by a fluorine atom.

Or, the trans-1,2-difluoroethylene has such a structure that: one of two hydrogen atoms bonded to the carbon atom at the first position in the ethylene structure is substituted by a fluorine atom; and between two hydrogen atoms bonded to the carbon atom at the second position, only the hydrogen atom at a position which is not adjacent to the carbon atom at the first position but is opposed to the carbon atom across the double bond is substituted by a fluorine atom.

Since such fluoroolefin includes the ethylene skeleton, i.e., the carbon-carbon double bond as described above, the double bond is easily decomposed. To be specific, ozone in the atmosphere generates hydroxyl radicals (OH radicals) by a photochemical reaction. Since the hydroxyl radicals can cause an addition reaction with respect to the double bond, the fluoroolefin is easily decomposed. Therefore, the fluoroolefin is less likely to influence ozone layer depletion and global warming.

The refrigeration-cycle working medium according to the present disclosure may include, as the refrigerant component, difluoromethane (HFC32, R32, chemical formula: CH₂F₂) in addition to the fluoroolefin. In this case, the fluoroolefin is regarded as a "main component (main refrigerant component)" of the refrigerant component in the refrigeration-cycle working medium according to the present disclosure, and the difluoromethane is regarded as a "subcomponent (sub-refrigerant component)" of the refrigerant component in the refrigeration-cycle working medium according to the present disclosure.

As described above, the difluoromethane has an ozone depletion potential (ODP) of zero and has a more satisfactory refrigerant performance than HCFC (hydrochlorofluorocarbon) that has been used before.

Moreover, the refrigeration-cycle working medium according to the present disclosure may include, as the refrigerant component, "another refrigerant component" in addition to the fluoroolefin as the main refrigerant component and the difluoromethane as the sub-refrigerant component. Representative examples of the another refrigerant component include: hydrofluorocarbons (HFCs), such as difluoroethane, trifluoroethane, tetrafluoroethane, pentafluoroethane, pentafluoropropane, hexafluoropropane, heptafluoropropane, pentafluorobutane, and heptafluorocyclopentane; and hydrofluoroolefins (HFOs), such as monofluoropropene, trifluoropropene, tetrafluoropropene, pentafluoropropene, and hexafluorobutene. However, the another refrigerant component is not especially limited.

These HFCs and HFOs are known as being less likely to influence the ozone layer depletion and the global warming. Therefore, each of the HFC and the HFO can be used as the refrigerant component together with the fluoroolefin or together with the fluoroolefin and the difluoromethane. Only one type of above-described another refrigerant component may be used together, or a suitable combination of two or more types of above-described another refrigerant component may be used together.

It is also known that the fluoroolefin causes a rapid disproportionation reaction by the above-described good decomposing property. As one representative example of the fluoroolefin, 1,1,2-trifluoroethylene will be described. In this disproportionation reaction, a self-decomposition reaction in which molecules of the 1,1,2-trifluoroethylene are decomposed occurs, and after this self-decomposition reaction, for example, a polymerization reaction in which carbons produced by the decomposition polymerize to form soot. When active radicals are generated by heat generation or the like in a high-temperature high-pressure state, the active radicals and the 1,1,2-trifluoroethylene react with each other to cause the disproportionation reaction. Since this disproportionation reaction generates heat, the active radicals are generated by this heat generation, and the disproportionation reaction is induced by the active radicals. As above, since the generation of the active radicals and the occurrence of the disproportionation reaction are caused successively, the disproportionation reaction rapidly proceeds.

Previously, the present applicants have diligently studied and found that the active radicals that induce the disproportionation reaction of the 1,1,2-trifluoroethylene mainly include fluorine radicals (F radicals) and also include radicals, such as trifluoromethyl radicals (CF₃ radicals) and difluoromethylene radicals (CF₂ radicals).

Therefore, the present applicants have tried to suppress or weaken the rapid disproportionation reaction in such a manner that under the condition that the difluoromethane is used as the refrigerant component together with the fluoroolefin, such as 1,1,2-trifluoroethylene, which causes the disproportionation reaction, a substance (disproportionation inhibitor) that can efficiently capture F radicals, CF₃ radicals, CF₂ radicals, and the like is added to the refrigeration-cycle working medium. As a result, the present applicants have uniquely found that a suitable disproportionation inhibitor may be obtained by the addition of the disproportionation inhibitors disclosed in PTLs 1 to 6.

The present inventors have further diligently studied and newly found that hydrofluoroolefin that is different from the above-described fluoroolefin and has three or more carbon atoms can effectively suppress the disproportionation reaction of the fluoroolefin.

### Disproportionation Inhibitor

### 1. Main Disproportionation Inhibitor

As the disproportionation inhibitor that suppresses the disproportionation reaction of the fluoroolefin that is the main refrigerant component, the refrigeration-cycle working medium according to the present disclosure includes hydrofluoroolefin (HFO) that is different from the fluoroolefin serving as the refrigerant component and has three or more carbon atoms.

The fluoroolefins as the above-described main refrigerant component include compounds which may be classified as hydrofluoroolefins aside from the number of carbons. Therefore, in the present embodiment, for convenience of explanation, the hydrofluoroolefin as the disproportionation inhibitor is referred to as "disproportionation-inhibiting HFO."

Moreover, as will be described later, the refrigeration-cycle working medium according to the present disclosure may include another disproportionation inhibitor in addition to the disproportionation-inhibiting HFO. Therefore, in the present embodiment, for convenience of explanation, the disproportionation-inhibiting HFO is referred to as a "main component (main disproportionation inhibitor)" of the disproportionation inhibitor, and the another disproportionation inhibitor other than the disproportionation-inhibiting HFO is referred to as a "subcomponent (sub-disproportionation inhibitor)" of the disproportionation inhibitor.

The main disproportionation inhibitor used in the refrigeration-cycle working medium according to the present disclosure is hydrofluoroolefin (HFO) having three or more carbon atoms and may be different from the fluoroolefin that is the refrigerant component.

As described above, the representative fluoroolefin in the present disclosure is fluoroethylene (fluoroethene) having two carbon atoms. However, the fluoroolefin having three or more carbon atoms can also be used as the refrigerant component. Such fluoroolefins may include hydrofluoroolefin in which hydrogen atoms bonded to carbon are not all substituted by halogen atoms. Therefore, the disproportionation-inhibiting HFO that is the main disproportionation inhibitor used in the present disclosure needs to be a compound different from the fluoroolefin that is the refrigerant component.

The type of a specific compound that is the disproportionation-inhibiting HFO as the main disproportionation inhibitor is not especially limited. One representative example is a compound that does not have a perfluoromethyl group (-CF₃) and a perfluoromethylene group (-CF₂-) in a molecular structure thereof.

It is thought that the compound including the perfluoromethyl group or the perfluoromethylene group in the molecular structure falls under PFAS (per-and polyfluoroalkyl substances) which are increasingly regulated worldwide in recent years. Some HFOs that fall under PFAS decompose in the atmosphere to produce trifluoroacetic acid (TFA) as a decomposition product. This TFA is also regulated as PFAS. To be specific, it can be said that the compound that falls under PFAS has a high environmental impact.

It is thought that when the disproportionation-inhibiting HFO that is the main disproportionation inhibitor is the compound that does not have the perfluoromethyl group and the perfluoromethylene group in the molecular structure, the disproportionation-inhibiting HFO does not produce the TFA as the decomposition product, and therefore, is outside the scope of PFAS regulations. Thus, it is possible to further reduce the environmental impact, and in addition, it is also possible to avoid the risk that the disproportionation-inhibiting HFO as the main disproportionation inhibitor may not be readily available.

Moreover, the disproportionation-inhibiting HFO may be a compound having at least one of a methyl group (-CH₃), a fluoromethyl group (-CH₂F), or a difluoromethyl group (-CHF₂) in the molecular structure. Since the disproportionation-inhibiting HFO includes the methyl group or the fluoromethyl group in the molecular structure, the disproportionation reaction of the fluoroolefin can be further effectively suppressed.

Examples of specific compounds as the disproportionation-inhibiting HFO that is the main disproportionation inhibitor include: HFO1225 compounds, such as 1,1,2,3,3-pentafluoropropene (HFO1225yc, CF₂H-CF = CF₂); HFO1234 compounds, such as 1,1,3,3-tetrafluoropropene (HFO1234zc, CF₂H-CH = CF₂), 1,2,3,3-tetrafluoropropene (HFO1234ye, CF₂H-CF = CFH), and 1,1,2,3-tetrafluoropropene (HFO1234yc, CFH₂-CF = CF₂); HFO1243 compounds, such as 1,3,3-trifluoropropene (HFO1243ze, CF₂H-CH = CFH), 2,3,3-trifluoropropene (HFO1243yf, CF₂H-CF = CH₂), 1,1,3-trifluoropropene (HFO1243zc, CFH₂-CH = CF₂), 1,2,3-trifluoropropene (HFO1243ye, CFH₂-CF = CFH), and 1,1,2-trifluoropropene (HFO1243yc, CH₃-CF = CF₂); HFO1252 compounds, such as 3,3-difluoropropene (HFO1252zf, CF₂-CH = CH₂), 1,3-difluoropropene (HFO1252ze, CFH₂-CH = CFH), 2,3-difluoropropene (HFO1252yf, CFH₂-CF = CH₂), 1,1-difluoropropene (HFO1252zc, CH₃-CH = CF₂), and 1,2-difluoropropene (HFO1252ye, CH₃-CF = CFH); and HFO1261 compounds, such as 3-fluoropropene (HFO1261zf, CFH₂-CH = CH₂), 2-fluoropropene (HFO1261yf, CH₃-CF = CH₂), and 1-fluoropropene (HFO1261ze, CH₃-CH = CFH). However, the disproportionation-inhibiting HFO is not especially limited. Only one of these compounds may be used as the main disproportionation inhibitor, or a combination of two or more of these compounds may be used as the main disproportionation inhibitor.

Among these compounds, 2,3,3-trifluoropropene (HFO1243yf), 1,1-difluoropropene (HFO1252zc), 3-fluoropropene (HFO1261zf), 2-fluoropropene (HFO1261yf), 3-fluoropropene (HFO1261zf), and the like can be more suitably used as the main disproportionation inhibitor. Moreover, 2,3,3-trifluoropropene and 2-fluoropropene can be especially suitably used as the main disproportionation inhibitor.

The refrigeration-cycle working medium according to the present disclosure is the refrigeration-cycle working medium including the fluoroolefin that causes the disproportionation reaction and also including at least the above-described disproportionation-inhibiting HFO as the main disproportionation inhibitor. The disproportionation-inhibiting HFO can effectively suppress or weaken the disproportionation reaction of the fluoroolefin.

In addition, the disproportionation-inhibiting HFO can be utilized as the refrigerant component. The disproportionation-inhibiting HFO has a satisfactory heat capacity comparable to that of the fluoroolefin and is easily mixed with the fluoroolefin. Therefore, the disproportionation-inhibiting HFO is suitable as a mixture component of the refrigeration-cycle working medium.

Moreover, as with the fluoroolefin serving as the refrigerant component, the disproportionation-inhibiting HFO includes a carbon-carbon double bond in the molecular structure. Therefore, the disproportionation-inhibiting HFO is readily decomposable in the natural environment, and this results in a short atmospheric lifetime and relatively low environmental impact.

Therefore, according to the refrigeration-cycle working medium of the present disclosure, even when the fluoroolefin that causes the disproportionation reaction is included as the refrigerant component, the disproportionation reaction can be suppressed or weakened, and the energy efficiency of the refrigeration-cycle working medium can be made satisfactory. Moreover, the environmental impact can be further reduced.

### 2. Sub-disproportionation Inhibitor (i)

In the present disclosure, first, (i) haloalkane that has one or two carbon atoms and is not a compound (fluoroalkane) in which all halogen atoms are fluorine can be used as the sub-disproportionation inhibitor. For convenience of explanation, the "haloalkane that has one or two carbon atoms and is not a compound (fluoroalkane) in which all halogen atoms are fluorine" is simply referred to as "(i) haloalkane." By using the disproportionation-inhibiting HFO as the main disproportionation inhibitor and the (i) haloalkane as the sub-disproportionation inhibitor together, the disproportionation reaction can be suppressed or delayed even when the amount of disproportionation inhibitors is smaller.

In the present disclosure, it is sufficient that the (i) haloalkane used as the sub-disproportionation inhibitor has one or two carbon atoms and is not a compound (fluoroalkane) in which all halogen atoms are fluorine. More specifically, examples of the (i) haloalkane include: haloalkane having two carbon atoms, i.e., haloethane (halogenated ethane); and haloalkane having one carbon atom, i.e., halomethane (halogenated methane). As the disproportionation inhibitor, the haloethane or the halomethane may be used together with the above-described saturated hydrocarbon. However, both of the haloethane and the halomethane may be used together.

The haloethane among the (i) haloalkanes used as the sub-disproportionation inhibitor may have a structure represented by Formula (1) below.

C₂HₘXₙ ... (1)

In Formula (1), X denotes halogen atoms selected from the group consisting of fluorine (F), chlorine (Cl), bromine (Br), and iodine (I), m is an integer of 0 or more, n is an integer of 1 or more, and the sum of m and n is 6. When n is 2 or more, the halogen atoms X are the same in type as each other or different in type from each other.

To be specific, the haloethane represented by Formula (1) may be at least one of monohaloethane represented by Formula (11) below, dihaloethane represented by Formula (12) below, trihaloethane represented by Formula (13) below, tetrahaloethane represented by Formula (14) below, pentahaloethane represented by Formula (15) below, or hexahaloethane represented by Formula (16) below.

Each of X¹, X², X³, X⁴, X⁵, and X⁶ in the haloethanes represented by Formulas (11) to (16) denotes one independent halogen atom. Therefore, X¹ to X⁶ may be halogen atoms that are different in type from each other, may be halogen atoms among which at least two halogen atoms are the same in type as each other, and the other halogen atoms are different in type, or may be halogen atoms that are the same in type as each other.

CH₂X¹CH₃ ... (11)

CHX¹X²CH₃ ... (12)

CX¹X²X³CH₃ ... (13)

CX¹X²X³CH₂X⁴ ... (14)

CX¹X²X³CHX⁴X⁵ ... (15)

CX¹X²X³CX⁴X⁵X⁶ ... (16)

It should be noted that a compound in which the halogen atoms X are constituted only by the fluorine F is excluded from the haloethane represented by Formula (1). This is because the haloethane in which the halogen atoms X are constituted only by the fluorine F corresponds to the fluoroalkane having one to three carbon atoms (fluoroalkane having two carbon atoms, i.e., fluoroethane) which is used as a below-described sub-disproportionation inhibitor (ii).

As described above, in the haloethane represented by Formula (1), the halogen atoms X may be at least one of F, Cl, Br, or I (except for a case where the halogen atoms X are constituted only by the fluorine F). Among these, it is preferable that the halogen atoms X be F and I, or the halogen atoms X be I. When the haloethane represented by Formula (1) includes Cl and/or Br, the ozone depletion potential (ODP) tends to become high. Therefore, there is a possibility that availability or handleability is limited. Moreover, regardless of the types of the halogen atoms X, the haloethane represented by Formula (1) includes a compound having a relatively high ozone depletion potential (ODP) and/or a relatively high global warming potential (GWP).

In the refrigeration-cycle working medium according to the present disclosure, the main disproportionation inhibitor is the disproportionation-inhibiting HFO. Therefore, as described below, the amount of haloethane added as the sub-disproportionation inhibitor is relatively small. Even when a plurality of types of disproportionation inhibitors are used together, the entire amount of disproportionation inhibitors added is adequately smaller than the amount of refrigerant component. Therefore, even when the haloethane having a relatively high ODP or a relatively high GWP is used, the haloethane does not significantly influence environment.

The specific haloethane represented by Formula (1) is not especially limited. Examples of the haloethane represented by Formula (1) include 1,1,1-trifluoro-2-iodoethane (CF₃CH₂I), monoiodoethane (CH₃CH₂I), monobromoethane (CH₃CH₂Br), and 1,1,1-triiodoethane (CH₃CI₃). Only one type of haloethane may be used, or a suitable combination of two or more types of haloethanes may be used. Among these, in consideration of the availability, the value of the ODP, the handleability, and the like, the 1,1,1-trifluoro-2-iodoethane (CF₃CH₂I) can be especially preferably used.

Specifically, the halomethane among the (i) haloalkanes used as the sub-disproportionation inhibitor may have a structure represented by Formula (2) below.

CHₚX_{q} ... (2)

In Formula (2), X denotes halogen atoms selected from the group consisting of F, Cl, Br, and I, p is an integer of 0 or more, q is an integer of 1 or more, and the sum of p and q is 4. When q is 2 or more, the halogen atoms X are the same in type as each other or different in type from each other.

To be specific, the halomethane represented by Formula (2) may be at least one of monohalomethane represented by Formula (21) below, dihalomethane represented by Formula (22) below, trihalomethane represented by Formula (23) below, or tetrahalomethane represented by Formula (24) below. Each of X¹, X², X³, and X⁴ in the halomethanes represented by Formulas (21) to (24) denotes one independent halogen atom as with the above-described haloethane. Therefore, X¹ to X⁴ may be halogen atoms that are different in type from each other, may be halogen atoms among which at least two halogen atoms are the same in type as each other, and the other halogen atoms are different in type, or may be halogen atoms that are the same in type as each other.

CH₃X¹ ... (21)

CH₂X¹X² ... (22)

CHX¹X²X³ ... (23)

CX¹X²X³X⁴ ... (24)

It should be noted that a compound in which the halogen atoms X are constituted only by the fluorine F is excluded from the halomethane represented by Formula (2). This is because the halomethane in which the halogen atoms X are constituted only by the fluorine F corresponds to the fluoroalkane having one to three carbon atoms (fluoroalkane having two carbon atoms, i.e., fluoroethane) which is used as the below-described sub-disproportionation inhibitor (ii).

Specific examples of the halomethane represented by Formula (2) include (mono)iodomethane (CH₃I), diiodomethane (CH₂I₂), dibromomethane (CH₂Br₂), bromomethane (CH₃Br), dichloromethane (CH₂Cl₂), chloroiodomethane (CH₂ClI), dibromochloromethane (CHBr₂Cl), tetraiodomethane (CI₄), carbon tetrabromide (CBr₄), bromotrichloromethane (CBrCl₃), dibromodichloromethane (CBr₂Cl₂), tribromofluoromethane (CBr₃F), difluoroiodomethane (CHF₂I), fluorodiiodomethane (CHFI₂), difluorodiiodomethane (CF₂I₂), dibromodifluoromethane (CBr₂F₂), and trifluoroiodomethane (CF₃I). However, the halomethane represented by Formula (2) is not especially limited. Only one type of halomethane may be used, or a suitable combination of two or more types of halomethanes may be used.

Among these, a more preferable halomethane is, for example, a compound in which the halogen atoms X include bromine, and examples of the more preferable halomethane include dibromomethane (CH₂Br₂), bromomethane (CH₃Br), dibromodichloromethane (CBr₂Cl₂), difluoroiodomethane (CHF₂I), and trifluoroiodomethane (CF₃I). An especially preferable halomethane is difluoroiodomethane (CHF₂I).

### 3. Sub-disproportionation Inhibitor (ii)

In the present disclosure, (ii) fluoroalkane having a boiling point of 0°C or less and having one to three carbon atoms (except for difluoromethane) can be used as the sub-disproportionation inhibitor. Herein, it can be said that the "fluoroalkane having one to three carbon atoms" is such a compound that at least one of hydrogen atoms included in alkane having one to three carbon atoms is substituted by fluorine.

For convenience of explanation, the "fluoroalkane having a boiling point of 0°C or less and having one to three carbon atoms (except for difluoromethane)" is simply referred to as "(ii) fluoroalkane." By using the disproportionation-inhibiting HFO as the main disproportionation inhibitor and the (ii) fluoroalkane as the sub-disproportionation inhibitor together, the disproportionation reaction can be suppressed or delayed even when the amount of disproportionation inhibitors is smaller.

Specific examples of the (ii) fluoroalkane include: fluoromethanes, such as fluoromethane (boiling point of -78.2°C), difluoromethane (boiling point of -51.6°C), trifluoromethane (boiling point of -84.4°C), and tetrafluoromethane (boiling point of -127.8°C); fluoroethanes, such as fluoroethane (boiling point of -37.1°C), 1, 1-difluoroethane (boiling point of -24.7°C), 1,1,1-trifluoroethane (boiling point of -47.2°C), 1, 1, 1,2-tetrafluoroethane (boiling point of -26.3°C), and 1,1,1,2,2-pentafluoroethane (boiling point of -48.5°C); and fluoropropanes, such as 1-fluoropropane (boiling point of -2.5°C), 2-fluoropropane (boiling point of -10.0°C), 2,2-difluoropropane (boiling point of -1.0°C), 1,1,1-trifluoropropane (boiling point of -12.0°C), 1,1,2,2-tetrafluoropropane (boiling point of -0.8°C), and 1,1,1,3,3,3-hexafluoropropane (boiling point of -1.4°C). Only one type of (ii) fluoroalkane may be used as the sub-disproportionation inhibitor, or a combination of two or more types of (ii) fluoroalkanes may be used as the sub-disproportionation inhibitor.

An especially representative compound among the (ii) fluoroalkanes is fluoroalkane having two or three carbon atoms, i.e., fluoroethane (two carbon atoms) or fluoropropane (three carbon atoms). Among these, an especially representative (ii) fluoroalkane is fluoropropane.

In the present disclosure, the fluoroethane that can be used as the sub-disproportionation inhibitor is such a compound that one or more of hydrogen atoms of ethane that is alkane having two carbon atoms are substituted by fluorine atoms, and the boiling point may be 0°C or less. Similarly, in the present disclosure, the fluoropropane that can be used as the sub-disproportionation inhibitor is such a compound that one or more of hydrogen atoms of propane that is alkane having three carbon atoms are substituted by fluorine atoms, and the boiling point may be 0°C or less.

Moreover, in the present disclosure, only the fluoroethane, only the fluoropropane, or a combination of the fluoroethane and the fluoropropane may be used as the (ii) fluoroalkane that is the sub-disproportionation inhibitor. When only the fluoroethane or only the fluoropropane is used as the sub-disproportionation inhibitor, for example, two or more types of fluoroethanes or two or more types of fluoropropanes may be used. Similarly, when the combination of the fluoroethane and the fluoropropane is used, only one type of fluoroethane and only one type of fluoropropane may be used, or at least one of the fluoroethane or the fluoropropane may be of two or more types. The same is true when fluoromethane having one carbon atom is used together as the sub-disproportionation inhibitor.

In the present disclosure, the (ii) fluoroalkane as the sub-disproportionation inhibitor is used as the refrigeration-cycle working medium together with the fluoroolefin as the main refrigerant component and the disproportionation-inhibiting HFO as the main disproportionation inhibitor. The refrigeration-cycle working medium which includes the refrigerant component and the disproportionation inhibitor is basically a gas in a normal temperature range, and therefore, the boiling point needs to be 0°C or less.

For example, since each of the boiling points of 1,2-difluoroethane (boiling point of 31°C), 1,1,2-trifluoroethane (boiling point of 5°C), 1,3-difluoropropane (boiling point of 40°C to 42°C), 1, 1, 1,3,3-pentafluoropropane (boiling point of 15.3°C), 1,1,2,2,3-pentafluoropropane (boiling point of 25°C to 26°C), and the like exceeds 0°C, these cannot be used as the sub-disproportionation inhibitor in the refrigeration-cycle working medium according to the present disclosure.

Moreover, in the present disclosure, difluoromethane is not included in the (ii) fluoroalkane that is the sub-disproportionation inhibitor. The boiling point of the difluoromethane is -51.7°C, and therefore, the difluoromethane corresponds to fluoroalkane having one carbon atom, i.e., fluoromethane. However, as described above, since the difluoromethane is the sub-refrigerant component that is used together with the fluoroolefin that is the main refrigerant component, the difluoromethane is excluded from the (ii) fluoroalkane as the sub-disproportionation inhibitor in the present disclosure.

In addition, for example, as is clear from the results of Comparative Examples in PTLs 4 and 5, it is thought that the difluoromethane that is the sub-refrigerant component does not have an effect of suppressing the disproportionation reaction of the fluoroolefin, such as 1,1,2-trifluoroethylene. From this point of view as well, the difluoromethane is excluded from the (ii) fluoroalkane as the sub-disproportionation inhibitor.

### 4. Sub-disproportionation Inhibitor (iii)

In the present disclosure, (iii) saturated hydrocarbon having two to five carbon atoms can be used as the sub-disproportionation inhibitor. For convenience of explanation, the "saturated hydrocarbon having two to five carbon atoms" is simply referred to as "(iii) alkane." By using the disproportionation-inhibiting HFO as the main disproportionation inhibitor and the (iii) alkane as the sub-disproportionation inhibitor together, the disproportionation reaction can be suppressed or delayed even when the amount of disproportionation inhibitors is smaller.

Specific examples of the (iii) alkane include: ethane; n-propane; cyclopropane; n-butane; cyclobutane; isobutane (2-methylpropane); methylcyclopropane; n-pentane; isopentane (2-methylbutane); neopentane (2,2-dimethylpropane); and methylcyclobutane. Only one type of (iii) alkane may be used, or a suitable combination of two or more types of (iii) alkanes may be used. A representative example among the (iii) alkanes is n-propane.

These (iii) alkanes are gases at normal temperature (the boiling points of n-pentane and methylcyclobutane are the highest, i.e., about 36°C, and the boiling points of the other hydrocarbons are lower than 36°C). The (iii) alkanes can be well mixed as components of the refrigeration-cycle working medium. The saturated hydrocarbon having six or more carbon atoms is a liquid at normal temperature and is difficult to be mixed as a component of the refrigeration-cycle working medium. Therefore, the saturated hydrocarbon having six or more carbon atoms is not preferable as the (iii) alkane used as the sub-disproportionation inhibitor. Moreover, the saturated hydrocarbon having one carbon atom, i.e., methane is not preferable since the global warming potential (GWP) thereof is high. Among the saturated hydrocarbons that fall under the (iii) alkanes, cyclopentane has a boiling point of 49°C and is a liquid at normal temperature, but can be used as the sub-disproportionation inhibitor depending on the conditions.

In the present disclosure, the (i) haloalkane, the (ii) fluoroalkane, or the (iii) alkane may be used alone as the sub-disproportionation inhibitor, but the (i) haloalkane, the (ii) fluoroalkane, and the (iii) alkane may be used by being suitably combined with each other. To be specific, in the refrigeration-cycle working medium according to the present disclosure, at least one type of compound selected from the group consisting of the (i) haloalkane, the (ii) fluoroalkane, and the (iii) alkane can be used as the sub-disproportionation inhibitor together with the disproportionation-inhibiting HFO that is the main disproportionation inhibitor.

Therefore, in the refrigeration-cycle working medium according to the present disclosure, only one compound corresponding to any one of the (i) haloalkane, the (ii) fluoroalkane, and the (iii) alkane may be used as the sub-disproportionation inhibitor. Or, a combination of a plurality of compounds corresponding to any one of the (i) haloalkane, the (ii) fluoroalkane, and the (iii) alkane may be used as the sub-disproportionation inhibitor. Or, a combination of a plurality of compounds corresponding to any two or all three of the (i) haloalkane, the (ii) fluoroalkane, and the (iii) alkane such that the number of compounds selected from each of the (i) haloalkane, the (ii) fluoroalkane, and the (iii) alkane is one may be used as the sub-disproportionation inhibitor. Or, a combination of a plurality of compounds corresponding to any two or all three of the (i) haloalkane, the (ii) fluoroalkane, and the (iii) alkane such that the number of compounds selected from each of the (i) haloalkane, the (ii) fluoroalkane, and the (iii) alkane is plural may be used as the sub-disproportionation inhibitor. Or, a combination of a plurality of compounds among which: some of the compounds correspond to any one or two of the (i) haloalkane, the (ii) fluoroalkane, and the (iii) alkane such that the number of compounds selected from each of the (i) haloalkane, the (ii) fluoroalkane, and the (iii) alkane is one; and the other compounds correspond to any two or one of the (i) haloalkane, the (ii) fluoroalkane, and the (iii) alkane such that the number of compounds selected from each of the (i) haloalkane, the (ii) fluoroalkane, and the (iii) alkane is plural may be used as the sub-disproportionation inhibitor.

### Content of Disproportionation Inhibitor

Next, the content of the above-described disproportionation inhibitor (the amount of above-described disproportionation inhibitor added) will be specifically described. As described above, in the refrigeration-cycle working medium according to the present disclosure, the disproportionation-inhibiting HFO is used as the main disproportionation inhibitor, and at least one compound selected from the group consisting of the (i) haloalkane, the (ii) fluoroalkane, and the (iii) alkane can be used together as the sub-disproportionation inhibitor.

For convenience sake, a total amount of the refrigerant component and the disproportionation inhibitor is referred to as a "refrigerant related component total amount." When this refrigerant related component total amount is regarded as 100 mass %, an upper limit of the amount of disproportionation inhibitor added (an upper limit of the content of the disproportionation inhibitor) is not especially limited but may be 50 mass % or less of the refrigerant related component total amount, 40 mass % or less of the refrigerant related component total amount, 30 mass % or less of the refrigerant related component total amount, 20 mass % or less of the refrigerant related component total amount, or 15 mass % or less of the refrigerant related component total amount.

This is because there is a possibility that when the content of the disproportionation inhibitor exceeds 50 mass % of the refrigerant related component total amount, the content of the disproportionation inhibitor in the refrigeration-cycle working medium is too large, and the refrigeration-cycle working medium cannot achieve a satisfactory physical property as the "refrigerant." Needless to say, the content of the disproportionation inhibitor may be 50 mass % or more of the refrigerant related component total amount depending on the composition of the refrigeration-cycle working medium.

When only the disproportionation-inhibiting HFO that is the main disproportionation inhibitor is used as the disproportionation inhibitor (which includes a case where only one type of disproportionation-inhibiting HFO is used and a case where two or more types of disproportionation-inhibiting HFOs are used together), the content of the disproportionation-inhibiting HFO is not especially limited but may be 50 mass % or less of the refrigerant related component total amount, 30 mass % or less of the refrigerant related component total amount, 20 mass % or less of the refrigerant related component total amount, or 10 mass % or less of the refrigerant related component total amount.

Basically, as the content of the disproportionation-inhibiting HFO increases, the effect of suppressing the disproportionation reaction of the fluoroolefin is obtained more easily. However, as described above, there is a possibility that when the content of the disproportionation inhibitor is too large, the refrigeration-cycle working medium cannot achieve a satisfactory physical property as the "refrigerant." It should be noted that the disproportionation-inhibiting HFO itself can be utilized as the refrigerant component. Therefore, unlike the sub-disproportionation inhibitor and the like, even when a relatively large amount of disproportionation-inhibiting HFO is contained in the refrigeration-cycle working medium, the refrigeration-cycle working medium can be utilized. Thus, even when the upper limit of the content of the disproportionation-inhibiting HFO is 50 mass % or less, both of the effect of suppressing the disproportionation reaction of the fluoroolefin and the satisfactory physical property (the performance as the refrigerant) of the refrigeration-cycle working medium can be effectively obtained.

Although it depends on conditions, even when the refrigeration-cycle working medium is subjected to a high-temperature high-pressure condition in a case where the content of the disproportionation-inhibiting HFO is 30 mass % or less, 20 mass % or less, or 15 mass % or less, the disproportionation reaction of the fluoroolefin can be satisfactorily suppressed by a relatively small amount of disproportionation-inhibiting HFO. In addition, when the content of the disproportionation-inhibiting HFO is 30 mass % or less, 20 mass % or less, or 15 mass % or less, the content of the disproportionation inhibitor can be reduced as a whole, and therefore, the performance of the refrigeration-cycle working medium as the refrigerant can be made more satisfactory.

Moreover, although it depends on conditions, when the content of the disproportionation-inhibiting HFO is 10 mass % or less, the disproportionation reaction of the fluoroolefin can be satisfactorily suppressed by a smaller amount of disproportionation-inhibiting HFO, and the performance of the refrigeration-cycle working medium as the refrigerant can be made further satisfactory. In addition, the combustibility of the refrigeration-cycle working medium can be made further low.

When at least one of the (i) haloalkane, the (ii) fluoroalkane, or the (iii) alkane is used as the sub-disproportionation inhibitor together with the disproportionation-inhibiting HFO that is the main disproportionation inhibitor in the disproportionation inhibitor, the content of the sub-disproportionation inhibitor is not especially limited, and the total amount of these sub-disproportionation inhibitors may be 10 mass % or less of the refrigerant related component total amount, 5 mass % or less of the refrigerant related component total amount, 3 mass % or less of the refrigerant related component total amount, or 1 mass % or less of the refrigerant related component total amount.

As with the disproportionation-inhibiting HFO, basically, as the content of the sub-disproportionation inhibitor increases, the effect of suppressing the disproportionation reaction of the fluoroolefin is obtained more easily. However, as described above, there is a possibility that when the content of the disproportionation inhibitor is too large, the refrigeration-cycle working medium cannot achieve the satisfactory physical property as the "refrigerant."

Although it depends on conditions, even when the refrigeration-cycle working medium is subjected to a high-temperature high-pressure condition in a case where the content of the sub-disproportionation inhibitor is 5 mass % or less or 3 mass % or less, the disproportionation reaction of the fluoroolefin can be satisfactorily suppressed by a relatively small amount of sub-disproportionation inhibitor. In addition, when the content of the sub-disproportionation inhibitor is 5 mass % or less or 3 mass % or less, the content of the disproportionation inhibitor can be reduced as a whole, and therefore, the performance of the refrigeration-cycle working medium as the refrigerant can be made more satisfactory.

Although it depends on conditions, even when the refrigeration-cycle working medium is subjected to a high-temperature high-pressure condition in a case where the content of the sub-disproportionation inhibitor is 1 mass % or less, especially in a case where the sub-disproportionation inhibitor is combined with the disproportionation-inhibiting HFO, the disproportionation reaction of the fluoroolefin can be satisfactorily suppressed by a relatively small amount of sub-disproportionation inhibitor. Moreover, when the content of the sub-disproportionation inhibitor is 1 mass % or less, the content of the disproportionation inhibitor can be reduced as a whole, and therefore, the performance of the refrigeration-cycle working medium as the refrigerant can be made more satisfactory.

When the disproportionation-inhibiting HFO that is the main disproportionation inhibitor and the sub-disproportionation inhibitor (at least one of the (i) haloalkane, the (ii) fluoroalkane, or the (iii) alkane) are used together as the disproportionation inhibitor, a mixing ratio of the main disproportionation inhibitor and the sub-disproportionation inhibitor is not especially limited, and the above-described upper limit of the content is applicable. As described above, when the refrigerant related component total amount is regarded as 100 mass %, one example of a preferable content as the total amount of disproportionation inhibitor is 40 mass % or less. Therefore, the disproportionation-inhibiting HFO and the sub-disproportionation inhibitor may be used together at an appropriate mixing ratio within this range.

Moreover, a lower limit of the content of the disproportionation inhibitor is not especially limited, but one example of a representative lower limit is 1.2 mass % or more of the refrigerant related component total amount. One example of the upper limit when the sub-disproportionation inhibitor is used as the disproportionation inhibitor is 1 mass %. However, in the present disclosure, since the haloalkane is used together with the disproportionation-inhibiting HFO, the lower limit of the total content of the disproportionation inhibitor (the lower limit of the sum of the content of the disproportionation-inhibiting HFO as the main disproportionation inhibitor and the content of the sub-disproportionation inhibitor) may be 1.2 mass % or more.

Although it depends on conditions, even when the total amount of disproportionation inhibitor (the total content of the disproportionation inhibitor) is less than 1.2 mass %, the effect of suppressing the disproportionation reaction and the like can be obtained. However, when the total amount of disproportionation inhibitor is 1.2 mass % or more, the effect of suppressing the disproportionation reaction and the like can be realized more suitably. Therefore, in the present disclosure, one example of a more preferable range of the content of the disproportionation inhibitor is a range of 1.2 mass % or more and 40 mass % or less of the refrigerant related component total amount.

Moreover, generally, in the refrigeration-cycle working medium, the content of impurities included in the refrigerant component is 2 to 3 mass % or less in many cases. For example, it is known that the purity of a commercial product of 1,1,2-trifluoroethylene that is a representative fluoroolefin is about 97 mass %. Examples of the impurities included in the commercial product include a residue and byproduct of a synthetic raw material, and the content of the impurities included is less than 3 mass %. In the present disclosure, the lower limit of the content of the disproportionation inhibitor may be not less than the content of the impurities of the commercial product, i.e., 3 mass % or more.

As described above, the upper limit of the content of the (iii) alkane among the sub-disproportionation inhibitors may be 10 mass % or less, 5 mass % or less, or 3 mass % or less. However, when the (iii) alkane is n-propane, the upper limit may be 8.5 mass % or less or 7.5 mass % or less.

The lower limit of the (iii) alkane is not especially limited. However, when the (iii) alkane is n-propane, the lower limit may be 5.0 mass % or more, 2.0 mass % or more, 1.0 mass %, or 0.6 mass % or more.

The (iii) alkane can also be used as the refrigerant component. However, when the (iii) alkane is used as not the refrigerant component but the sub-disproportionation inhibitor together with the main disproportionation inhibitor (disproportionation-inhibiting HFO), the effect of suppressing the disproportionation reaction can be achieved by an amount smaller than the amount of (iii) alkane used as the refrigerant component in the refrigeration-cycle working medium. Although it depends on conditions, when the (iii) alkane is n-propane, the effect of suppressing the disproportionation reaction can be satisfactorily achieved by selecting the combination of the upper limit and the lower limit.

The amount of disproportionation inhibitor added can be adjusted depending on conditions, and therefore, may not be necessarily specified. Thus, the upper limit, the lower limit, and the like of the content of the disproportionation inhibitor are merely representative and preferable examples.

The content of the difluoromethane that is the sub-refrigerant component in the refrigeration-cycle working medium is not especially limited. As described above, in the present disclosure, the fluoroolefin is the main refrigerant component. Therefore, in the refrigeration-cycle working medium according to the present disclosure, the content of the fluoroolefin may be larger than the content of the difluoromethane.

In the refrigeration-cycle working medium according to the present disclosure, it is important to lower the GWP as much as possible. Specifically, the GWP is desirably 200 or less (GWP ≤ 200) and is more desirably 150 or less (GWP ≤ 150). When the fluoroolefin and the difluoromethane are used together as the refrigerant component, the upper limit of the content of the difluoromethane may be 30 mass % or less of the refrigerant related component total amount, 25 mass % or less of the refrigerant related component total amount, or 20 mass % or less of the refrigerant related component total amount.

When the content of the difluoromethane is 30 mass % or less, the GWP of the refrigeration-cycle working medium can be set to 200 or less. When the content of the difluoromethane is 20 mass % or less, the GWP of the refrigeration-cycle working medium can be set to 150 or less. The lower limit of the difluoromethane is not especially limited. In the refrigeration-cycle working medium according to the present disclosure, the difluoromethane does not have to be included, and therefore, the content of the difluoromethane may be 0 mass % or more.

### Other Components That May be Used Together

Since the refrigeration-cycle working medium according to the present disclosure is used in the refrigeration cycle system, the refrigeration-cycle working medium can be used together with lubricating oil (freezer oil) that lubricates a compressor included in the refrigeration cycle system.

As described above, in the refrigeration-cycle working medium according to the present disclosure, the fluoroolefin (1,1,2-trifluoroethylene, for example) that causes the disproportionation reaction is used as the main refrigerant component, and the difluoromethane as the sub-refrigerant component is used together according to need. In addition, at least the disproportionation-inhibiting HFO (main disproportionation inhibitor) may be used as the disproportionation inhibitor. Moreover, when the refrigeration-cycle working medium is used together with the lubricating oil, a working medium-containing composition can be regarded as being constituted by the refrigerant component, the disproportionation inhibitor, a lubricating oil component, and other components. In the refrigeration-cycle working medium according to the present disclosure, the disproportionation inhibitor is typically mixed with the refrigerant component but may be mixed with the lubricating oil component depending on the situation.

As the lubricating oil component included in the working medium-containing composition (the lubricating oil component used together with the refrigeration-cycle working medium), various types of known lubricating oil can be suitably used in the refrigeration cycle system. Specific examples of the lubricating oil include ester lubricating oil, ether lubricating oil, glycol lubricating oil, alkylbenzene lubricating oil, fluorine lubricating oil, mineral oil, and hydrocarbon synthetic oil. However, the lubricating oil is not especially limited. Only one type of lubricating oil may be used, or a suitable combination of two or more types of lubricating oil may be used.

Moreover, various known additives other than the disproportionation inhibitor may be added to the working medium-containing composition. Specific examples of the additives include an oxidation inhibitor, a moisture scavenger, a metal deactivator, an abrasion preventing agent, and an antifoaming agent. However, the additive is not especially limited. The oxidation inhibitor is used to improve heat stability, oxidation resistance, chemical stability, and the like of the refrigerant component or the lubricating oil. The moisture scavenger is used to, when moisture enters the refrigeration cycle system, remove the moisture and especially suppress a property change of the lubricating oil. The metal deactivator is used to suppress or prevent a chemical reaction caused by catalysis of a metal component. The abrasion preventing agent is used to reduce wear at a slide portion in the compressor, especially wear during an operation in which pressure is high. The antifoaming agent is used to especially suppress the generation of air bubbles in the lubricating oil.

Specific types of additives are not especially limited, and a known compound and the like may be suitably used depending on conditions. Moreover, as the additive, only one type of compound or the like may be used, or a suitable combination of two or more types of compounds or the like may be used. Furthermore, the amount of additive added is not especially limited. A known amount of additive may be added as long as the property of the refrigeration-cycle working medium according to the present disclosure is not spoiled, or the property of the working medium-containing composition including the refrigeration-cycle working medium is not spoiled.

The refrigeration-cycle working medium according to the present disclosure may not include the other components. One example is the refrigeration-cycle working medium in which: the 1,1,2-trifluoroethylene among the fluoroolefins is used as the refrigerant component; and only the disproportionation-inhibiting HFO is used as the disproportionation inhibitor. Another example is the refrigeration-cycle working medium in which: the 1,1,2-trifluoroethylene and the difluoromethane are used as the refrigerant component; and only the disproportionation-inhibiting HFO is used as the disproportionation inhibitor.

Or, the refrigeration-cycle working medium according to the present disclosure may include: as the refrigerant component, only the fluoroolefin that is the main refrigerant component; and as the disproportionation inhibitor, the disproportionation-inhibiting HFO that is the main disproportionation inhibitor and at least one of the (i) haloalkane, the (ii) fluoroalkane, or the (iii) alkane which is the sub-disproportionation inhibitor. Or, the refrigeration-cycle working medium may include: as the refrigerant component, the fluoroolefin that is the main refrigerant component and the difluoromethane that is the sub-refrigerant component; and as the disproportionation inhibitor, the disproportionation-inhibiting HFO that is the main disproportionation inhibitor and the sub-disproportionation inhibitor (at least one of the (i) haloalkane, the (ii) fluoroalkane, or the (iii) alkane).

### Configuration Example of Refrigeration Cycle System

Next, one example of the refrigeration cycle system constituted by using the refrigeration-cycle working medium according to the present disclosure will be described with reference to FIGS. 1A and 1B.

A specific configuration of the refrigeration cycle system according to the present disclosure is not especially limited and may be such a configuration that elements, such as a compressor, a condenser, an expander, and a vaporizer, are connected to each other through a pipe. Specific application examples of the refrigeration cycle system according to the present disclosure are not especially limited and include air conditioning equipment (air conditioner), a refrigerator (home use, business use), a dehumidifier, a showcase, an ice maker, a heat pump water heater, a heat pump washing/drying machine, and a vending machine.

The air conditioning equipment will be described as a representative application example of the refrigeration cycle system according to the present disclosure. Specifically, as schematically shown in a block diagram of FIG. 1A, air conditioning equipment 10 according to the present embodiment includes indoor equipment 11, outdoor equipment 12, and a pipe 13 connecting the indoor equipment 11 and the outdoor equipment 12. The indoor equipment 11 includes a heat exchanger 14, and the outdoor equipment 12 includes a heat exchanger 15, a compressor 16, and a decompressor 17.

The heat exchanger 14 of the indoor equipment 11 and the heat exchanger 15 of the outdoor equipment 12 are annularly connected to each other by the pipe 13, and this forms a refrigeration cycle. Specifically, the heat exchanger 14 of the indoor equipment 11, the compressor 16, the heat exchanger 15 of the outdoor equipment 12, and the decompressor 17 are annularly connected to each other in this order by the pipe 13. Moreover, a four-way valve 18 for switching between cooling and heating is located at the pipe 13 that connects the heat exchanger 14, the compressor 16, and the heat exchanger 15 to each other. The indoor equipment 11 includes a fan, a temperature sensor, an operating device, and the like which are not shown, and the outdoor equipment 12 includes a blower, an accumulator, and the like which are not shown. Furthermore, various valve devices (including the four-way valve 18), a strainer, and the like which are not shown are located at the pipe 13.

The heat exchanger 14 included in the indoor equipment 11 performs heat exchange between indoor air taken into the indoor equipment 11 by the fan and a refrigerant flowing inside the heat exchanger 14. At the time of the heating, the indoor equipment 11 sends air, which has been heated by the heat exchange, to an indoor side. At the time of the cooling, the indoor equipment 11 sends air, which has been cooled by the heat exchange, to the indoor side. The heat exchanger 15 included in the outdoor equipment 12 performs heat exchange between outside air taken into the outdoor equipment 12 by the blower and a refrigerant flowing inside the heat exchanger 15.

Specific configurations of the indoor equipment 11 and the outdoor equipment 12 or specific configurations of the heat exchanger 14, the heat exchanger 15, the compressor 16, the decompressor 17, the four-way valve 18, the fan, the temperature sensor, the operating device, the blower, the accumulator, the other valve devices, the strainer, and the like are not especially limited, and known configurations can be suitably used.

One example of the operation of the air conditioning equipment 10 shown in FIG. 1A will be specifically described. First, in a cooling operation or a dehumidifying operation, the compressor 16 of the outdoor equipment 12 compresses and discharges a gas refrigerant, and thus, the gas refrigerant is sent through the four-way valve 18 to the heat exchanger 15 of the outdoor equipment 12. Since the heat exchanger 15 performs the heat exchange between the outside air and the gas refrigerant, the gas refrigerant condenses into liquid. This liquid refrigerant is decompressed by the decompressor 17 and is sent to the heat exchanger 14 of the indoor equipment 11. In the heat exchanger 14, the liquid refrigerant vaporizes by the heat exchange with the indoor air to become the gas refrigerant. This gas refrigerant returns through the four-way valve 18 to the compressor 16 of the outdoor equipment 12. The compressor 16 compresses the gas refrigerant and discharges the gas refrigerant through the four-way valve 18 to the heat exchanger 15 again.

Moreover, in a heating operation, the compressor 16 of the outdoor equipment 12 compresses and discharges the gas refrigerant, and thus, the gas refrigerant is sent through the four-way valve 18 to the heat exchanger 14 of the indoor equipment 11. In the heat exchanger 14, the gas refrigerant condenses into liquid by the heat exchange with the indoor air. This liquid refrigerant is decompressed by the decompressor 17 to become a gas-liquid two-phase refrigerant, and the gas-liquid two-phase refrigerant is sent to the heat exchanger 15 of the outdoor equipment 12. Since the heat exchanger 15 performs the heat exchange between the outside air and the gas-liquid two-phase refrigerant, the gas-liquid two-phase refrigerant vaporizes to become the gas refrigerant, and the gas refrigerant returns to the compressor 16. The compressor 16 compresses the gas refrigerant and discharges the gas refrigerant through the four-way valve 18 to the heat exchanger 14 of the indoor equipment 11 again.

Moreover, a refrigerator will be described as another representative application example of the refrigeration cycle system according to the present disclosure. Specifically, for example, as schematically shown in a block diagram of FIG. 1B, a refrigerator 20 according to the present embodiment includes a compressor 21, a condenser 22, a decompressor 23, a vaporizer 24, a pipe 25, and the like. Moreover, although not shown, the refrigerator 20 further includes a casing as a main body, a blower, an operating device, a controller, and the like.

The compressor 21 compresses a refrigerant gas to generate a high-temperature high-pressure gas refrigerant. The condenser 22 cools the refrigerant to liquefy the refrigerant. The decompressor 23 is constituted by, for example, a capillary tube and decompresses the liquefied refrigerant (liquid refrigerant). The vaporizer 24 vaporizes the refrigerant to generate a low-temperature low-pressure gas refrigerant. The compressor 21, the condenser 22, the decompressor 23, and the vaporizer 24 are annularly connected to each other in this order by the pipe 25 through which the refrigerant gas flows. Thus, the refrigeration cycle is configured.

Configurations of the compressor 21, the condenser 22, the decompressor 23, the vaporizer 24, the pipe 25, the main body casing, the blower, the operating device, the controller, and the like are not especially limited, and known configurations can be suitably used. Moreover, the refrigerator 20 may include known configurations other than the above configurations.

One example of the operation of the refrigerator 20 shown in FIG. 1B will be specifically described. The compressor 21 compresses the gas refrigerant and discharges the gas refrigerant to the condenser 22. The condenser 22 cools the gas refrigerant to generate the liquid refrigerant. The liquid refrigerant is decompressed by passing through the decompressor 23, and is then sent to the vaporizer 24. In the vaporizer 24, the liquid refrigerant takes heat from surroundings to vaporize and become the gas refrigerant, and the gas refrigerant returns to the compressor 21. The compressor 21 compresses the gas refrigerant and discharges the gas refrigerant to the condenser 22 again.

Each of the air conditioning equipment 10 and the refrigerator 20 is the refrigeration cycle system configured by using the above-described refrigeration-cycle working medium. The fluoroolefin used in the refrigeration-cycle working medium has a satisfactory property as the refrigerant component and has a low ODP and a low GWP. In addition, the refrigeration-cycle working medium contains at least the disproportionation-inhibiting HFO as the disproportionation inhibitor.

Therefore, the disproportionation reaction of the fluoroolefin can be effectively suppressed or weakened, and the energy efficiency can be made satisfactory. Moreover, the environmental impact can be further reduced. Thus, the refrigeration cycle system can reduce influence on environment, is efficient, and excels in the practical use.

### Examples

The present invention will be more specifically described based on Example and Comparative Example. However, the present invention is not limited to these. A skilled person can make various modifications, corrections, and alterations within the scope of the present invention.

### Experimental System for Disproportionation Reaction

A pressure sensor, a thermocouple, and an electric discharger were attached to a sealed pressure-resistant container (internal volume of 50 mL). The pressure sensor measures internal pressure in the pressure-resistant container. The thermocouple measures an internal temperature in the pressure-resistant container. The electric discharger generates electric discharge in the pressure-resistant container.

Moreover, a gas bomb (HFO1123 gas bomb) of 1,1,2-trifluoroethylene (containing 5% of limonene (liquid phase) as a stabilizer) that was the refrigerant component was connected to the pressure-resistant container such that the pressure of the 1,1,2-trifluoroethylene was adjustable. The pressure sensor and the thermometer which were attached to the pressure-resistant container were connected to a data logger. Thus, an experimental system for the disproportionation reaction was constructed.

### Comparative Example

In the above experimental system, the 1,1,2-trifluoroethylene was introduced from the HFO1123 gas bomb into the pressure-resistant container. Therefore, in the refrigeration-cycle working medium in the pressure-resistant container, the content of the 1,1,2-trifluoroethylene was 100 mass %.

To induce the disproportionation reaction of the 1,1,2-trifluoroethylene, the electric discharger generated electric discharge at a discharge voltage of 100 V under conditions of the room temperature and the internal pressure of 1.3 MPa. Then, after the internal pressure and the internal temperature adequately lowered, the inside of the pressure-resistant container was inspected. As a result, the generation of a considerable amount of soot was observed, and the occurrence of the disproportionation reaction of the 1,1,2-trifluoroethylene was observed.

### Example

In the experimental system, the 1,1,2-trifluoroethylene was introduced from the HFO1123 gas bomb into the pressure-resistant container. In addition, 2,3,3-trifluoropropene (HFO1243yf) was added as the disproportionation inhibitor such that the content becomes 10 mass %.

In the same manner as Comparative Example except for this, the electric discharge was generated in the pressure-resistant container. However, a significant pressure increase and a significant temperature increase were not observed. Then, the inside of the pressure-resistant container was inspected, but the occurrence of the disproportionation reaction of the 1,1,2-trifluoroethylene was not observed.

The present invention is not limited to the above-described embodiment and may be modified in various ways within the scope of the claims, and embodiments obtained by suitably combining technical means disclosed in different embodiments and/or plural modified examples are included in the technical scope of the present invention.

From the foregoing description, numerous modifications and other embodiments of the present invention are obvious to those skilled in the art. Accordingly, the foregoing description is to be construed as illustrative only, and is provided for the purpose of teaching those skilled in the art the best mode for carrying out the present invention. The structural and/or functional details may be substantially modified without departing from the scope of the present invention.

### Additional Information

The present description discloses the following technologies by the above embodiment.

### First Technology

A refrigeration-cycle working medium including: as a refrigerant component, fluoroolefin that causes a disproportionation reaction; and as a disproportionation inhibitor that suppresses the disproportionation reaction of the fluoroolefin, hydrofluoroolefin that is different from the fluoroolefin and has three or more carbon atoms.

### Second Technology

The refrigeration-cycle working medium according to the first technology, wherein the hydrofluoroolefin does not have a perfluoromethyl group (-CF₃) and a perfluoromethylene group (-CF₂-) in a molecular structure thereof.

### Third Technology

The refrigeration-cycle working medium according to the first technology, wherein the hydrofluoroolefin has at least one of a methyl group (-CH₃), a fluoromethyl group (-CH₂F), or a difluoromethyl group (-CHF₂) in a molecular structure thereof.

### Fourth Technology

The refrigeration-cycle working medium according to any one of the first to third technologies, wherein the hydrofluoroolefin is 2,3,3-trifluoropropene (HFO1243yf, CF₂H-CF = CH₂), 1,1-difluoropropene (HFO1252zc, CH₃-CH = CF₂), 2-fluoropropene (HFO1261yf, CH₃-CF = CH₂), or 3-fluoropropene (HFO1261zf, CFH₂-CH = CH₂).

### Fifth Technology

The refrigeration-cycle working medium according to any one of the first to third technologies, wherein the hydrofluoroolefin has a boiling point of 0°C or less.

### Sixth Technology

The refrigeration-cycle working medium according to any one of the first to fifth technologies, wherein the fluoroolefin that causes the disproportionation reaction is 1,1,2-trifluoroethylene or difluoroethylene.

### Seventh Technology

The refrigeration-cycle working medium according to any one of the first to sixth technologies, further including difluoromethane (R32) as the refrigerant component.

### Eighth Technology

The refrigeration-cycle working medium according to any one of the first to seventh technologies, further including, when the hydrofluoroolefin is a main disproportionation inhibitor, as the disproportionation inhibitor, a sub-disproportionation inhibitor that is at least one selected from the group consisting of (i) haloalkane that has one or two carbon atoms and is not a compound in which all halogen atoms are fluorine, (ii) fluoroalkane having a boiling point of 0°C or less and having one to three carbon atoms (except for difluoromethane), and (iii) saturated hydrocarbon having two to five carbon atoms.

### Ninth Technology

The refrigeration-cycle working medium according to any one of the first to eighth technologies, wherein when a total amount of the refrigerant component and the disproportionation inhibitor is regarded as 100 mass %, the content of the hydrofluoroolefin is 50 mass % or less.

### Tenth Technology

The refrigeration-cycle working medium according to the seventh technology (or according to the eighth or ninth technology depending only on the seventh technology), wherein when a total amount of the refrigerant component and the disproportionation inhibitor is regarded as 100 mass %, the content of the difluoromethane is 30 mass % or less.

### Eleventh Technology

The refrigeration-cycle working medium according to the eighth technology (or according to the ninth or tenth technology depending only on the eighth technology), wherein when a total amount of the refrigerant component and the disproportionation inhibitor is regarded as 100 mass %, the content of the sub-disproportionation inhibitor is 10 mass % or less.

### Twelfth Technology

A refrigeration cycle system configured by using the refrigeration-cycle working medium according to any one of the first to eleventh technologies.

### Industrial Applicability

The present invention can be suitably used in the field of a working medium used for a refrigeration cycle, and in addition, can be widely and suitably used in the field of a refrigeration cycle system, such as air conditioning equipment (air conditioner), a refrigerator (home use, business use), a dehumidifier, a showcase, an ice maker, a heat pump water heater, a heat pump washing/drying machine, or a vending machine.

### Reference Signs List

- 10: air conditioning equipment (refrigeration cycle system)
- 11: indoor equipment
- 12: outdoor equipment
- 13: pipe
- 14: heat exchanger
- 15: heat exchanger
- 16: compressor
- 17: decompressor
- 18: four-way valve
- 20: refrigerator (refrigeration cycle system)
- 21: compressor
- 22: condenser
- 23: decompressor
- 24: vaporizer
- 25: pipe

## Claims

1. A refrigeration-cycle working medium comprising:
as a refrigerant component, fluoroolefin that causes a disproportionation reaction; and
as a disproportionation inhibitor that suppresses the disproportionation reaction of the fluoroolefin, hydrofluoroolefin that is different from the fluoroolefin and has three or more carbon atoms.

2. The refrigeration-cycle working medium according to claim 1, wherein the hydrofluoroolefin does not have a perfluoromethyl group (-CF₃) and a perfluoromethylene group (-CF₂-) in a molecular structure thereof.

3. The refrigeration-cycle working medium according to claim 1, wherein the hydrofluoroolefin has at least one of a methyl group (-CH₃), a fluoromethyl group (-CH₂F), or a difluoromethyl group (-CHF₂) in a molecular structure thereof.

4. The refrigeration-cycle working medium according to claim 3, wherein the hydrofluoroolefin has a boiling point of 0°C or less.

5. The refrigeration-cycle working medium according to any one of claims 1 to 4, wherein the hydrofluoroolefin is 2,3,3-trifluoropropene (HFO1243yf, CF₂H-CF = CH₂), 1,1-difluoropropene (HFO1252zc, CH₃-CH = CF₂), 2-fluoropropene (HFO1261yf, CH₃-CF = CH₂), or 3-fluoropropene (HFO1261zf, CFH₂-CH = CH₂).

6. The refrigeration-cycle working medium according to any one of claims 1 to 4, wherein the fluoroolefin that causes the disproportionation reaction is 1,1,2-trifluoroethylene or difluoroethylene.

7. The refrigeration-cycle working medium according to any one of claims 1 to 4, further comprising difluoromethane (R32) as the refrigerant component.

8. The refrigeration-cycle working medium according to any one of claims 1 to 4, further comprising, when the hydrofluoroolefin is a main disproportionation inhibitor, as the disproportionation inhibitor, a sub-disproportionation inhibitor that is at least one selected from the group consisting of
(i) haloalkane that has one or two carbon atoms and is not a compound in which all halogen atoms are fluorine,
(ii) fluoroalkane having a boiling point of 0°C or less and having one to three carbon atoms (except for difluoromethane), and
(iii) saturated hydrocarbon having two to five carbon atoms.

9. The refrigeration-cycle working medium according to any one of claims 1 to 4, wherein when a total amount of the refrigerant component and the disproportionation inhibitor is regarded as 100 mass %, the content of the hydrofluoroolefin is 50 mass % or less.

10. The refrigeration-cycle working medium according to claim 7, wherein when a total amount of the refrigerant component and the disproportionation inhibitor is regarded as 100 mass %, the content of the difluoromethane is 30 mass % or less.

11. The refrigeration-cycle working medium according to claim 8, wherein when a total amount of the refrigerant component and the disproportionation inhibitor is regarded as 100 mass %, the content of the sub-disproportionation inhibitor is 10 mass % or less.

12. A refrigeration cycle system configured by using the refrigeration-cycle working medium according to any one of claims 1 to 4.
